# EUROPEAN PATENT SPECIFICATION

(11) **EP 4 246 203 B1**
(45) Date of publication and mention of the grant of the patent: **12.03.2025**
(21) Application number: 23161888.5
(22) Date of filing: 14.03.2023
(51) Int. Cl.: G02B 21/00, G02B 27/58

(54) **METHOD, DEVICE AND COMPUTER PROGRAM FOR TRACKING A LIGHT-EMITTING ENTITY IN A SAMPLE**
VERFAHREN, VORRICHTUNG UND COMPUTERPROGRAMM ZUR VERFOLGUNG EINER LICHTEMITTIERENDEN EINHEIT IN EINER PROBE
PROCÉDÉ, DISPOSITIF ET PROGRAMME INFORMATIQUE POUR SUIVRE UNE ENTITÉ ÉLECTROLUMINESCENTE DANS UN ÉCHANTILLON

(30) Priority: 17.03.2022 EP 22162795
(43) Date of publication of application: 20.09.2023
(73) Proprietor: Abberior Instruments GmbH, 37077 Göttingen (DE)
(72) Inventor: Schmidt, Roman, 37077 Göttingen (DE)

(56) References cited:
- SCHMIDT ROMAN ET AL: "MINFLUX nanometer-scale 3D imaging and microsecond-range tracking on a common fluorescence microscope", NATURE COMMUNICATIONS, vol. 12, no. 1, 1 January 2021 (2021-01-01), pages 1 - 12, XP055832558, DOI: 10.1038/s41467-021-21652-z
- FALLET CLÉMENT ET AL: "Conical diffraction as a versatile building block to implement new imaging modalities for superresolution in fluorescence microscopy", PROCEEDINGS OF SPIE, IEEE, US, vol. 9169, 28 August 2014 (2014-08-28), pages 916905 - 916905, XP060039281, ISBN: 978-1-62841-730-2, DOI: 10.1117/12.2061059
- KLAUS HOYER ET AL: "3D scanning particle tracking velocimetry", EXPERIMENTS IN FLUIDS ; EXPERIMENTAL METHODS AND THEIR APPLICATIONS TO FLUID FLOW, SPRINGER, BERLIN, DE, vol. 39, no. 5, 1 November 2005 (2005-11-01), pages 923 - 934, XP019338285, ISSN: 1432-1114, DOI: 10.1007/S00348-005-0031-7

## Description

### Technical area of the invention

The invention relates to a method, a device, and a computer program for tracking a light-emitting entity in a sample, particularly by MINFLUX tracking.

### Prior art

Tracking of fluorescently labeled single particles provides valuable information, particularly in the field of molecular cell biology (see, e.g., N. Ruthardt, D.C. Lamb, C. Bräuchle: "Single-particle Tracking as a Quantitative Microscopy-based Approach to Unravel Cell Entry Mechanisms of Viruses and Pharmaceutical Nanoparticles", Molecular Therapy, 19 (7), 2011, 1199-1211).

In a commonly applied setup for single-particle tracking, emission signals from fluorophores excited by widefield illumination are detected by a camera in subsequent frames. The location of the single particle in each frame is determined from the centroids of the diffraction-limited spots picked up by the camera. During camera imaging, the detected light intensities for each pixel are integrated over a time interval defined by the frame rate of the camera, usually in the millisecond range.

MINFLUX microscopy, a relatively new single molecule localization technique (Balzarotti F, Eilers Y, Gwosch KC, Gynnå AH, Westphal V, Stefani FD, Elf J, Hell SW. Nanometer resolution imaging and tracking of fluorescent molecules with minimal photon fluxes. Science. 2017 Feb 10;355(6325):606-612. doi: 10.1126/science.aak9913. Epub 2016 Dec 22. PMID: 28008086) is not only able to provide single molecule localization images with nanometer precision but can also track single molecules over time with superior temporal and spatial resolution and high photon efficiency.

According to the MINFLUX tracking routine published by Balzarotti et al. (see above-cited reference), a donut-shaped excitation light distribution is successively placed at four illumination positions, wherein one position is located at a previously determined position estimate of a single emitter in the sample, and the three remaining positions are arranged in a circle around the central position. Based on the principle that light emission is minimal when the donut center is placed at the actual position of the emitter, and emission increases with the distance from this position, a new position estimate is determined from the photon counts measured while the donut center is placed at the four positions, using a maximum-likelihood estimator.

Two different tracking modalities are described in Balzarotti et al.: According to a first variant, the donut-shaped excitation light distribution is kept stationary to track nanometer-scale movements of the emitter within the circle formed by the illumination positions. In a second variant, which is suitable to track movements in the micrometer range, the center of the pattern of illumination positions is re-centered to the previous position estimate in each step.

According to Balzarotti et al., tracking occurs in a fixed time schedule: To realize an overall tracking rate of 8 kHz, the donut center is displaced to the four positions of the illumination pattern in a fixed 125 µs time window.

Although this allows easy data processing (e.g., display of trajectories), a high variability of localization accuracy results for emitters displaying varying emission rates (e.g., emission bursts) due to the fixed time window. Furthermore, the tracking speed and the photon efficiency are not optimal, since more photons than actually necessary are detected during periods of high emission rates.

The article "Conical diffraction as a versatile building block to implement new imaging modalities for superresolution in fluorescence microscopy" (C. Fallet, J. Caron, S. Oddos, J-Y. Tinevez, L. Moisan, G. Y. Sirat, P. O. Braitbart, S.L. Shorte (2014), Proc. of SPIE 9169, 916905) describes a method termed "dark tracking", in which a single fluorophore is tracked with a vortex beam generated by conical diffraction. It is envisioned to maintain the fluorophore at the intensity zero position of the beam by a feedback mechanism, wherein emitted light due to fluctuations from this position is registered by a camera with a frame rate in the kHz range.

A later implementation of MINFLUX tracking published by Schmidt, R., Weihs, T., Wurm, C.A. et al. MINFLUX nanometer-scale 3D imaging and microsecond-range tracking on a common fluorescence microscope. Nat Commun 12, 1478 (2021). https://doi.org/10.1038/s41467-021-21652-z has solved this problem by applying a pre-set photon budget instead of a fixed time window. In each tracking step, the emitter is localized iteratively in a number of sub-steps until a pre-set number of photons has been acquired.

This further improves the speed of MINFLUX tracking, since each tracking step lasts only as long as necessary, and results in a uniform localization accuracy over the obtained trajectory.

However, the method has the drawback that each tracking step has a different duration. Thus, the resulting MINFLUX tracking data cannot be directly compared with camera-based tracking results, for which the frame rate of the camera defines a fixed time grid.

### Objective problem

In view of the above-described problems of the prior art, the objective underlying the present invention is to provide an accurate and photon-efficient method for tracking a light-emitting entity in a sample yielding tracking data which are directly comparable to tracking data obtained by other methods, particularly camera-based tracking data.

### Solution

This objective is attained by the subject matter of the independent claims 1 (method), 12 (device) and 13 (computer program). Embodiments of the invention are specified in the sub claims 2 to 11 and described hereafter.

### Description of the invention

A first aspect of the invention relates to a method for tracking a light-emitting entity in a sample, wherein in a plurality of tracking steps, the sample is illuminated at illumination positions in the vicinity of a position estimate of a light-emitting entity by focused illumination light having an illumination light distribution comprising a local intensity minimum and at least one intensity increasing area adjacent to the minimum, detection light emitted from the light emitting entity in response to the illumination light is detected for each of the illumination positions, and a new position estimate of the light-emitting entity is determined based on the detection light once the detection light exceeds a predefined light dose, wherein tracking data are generated from the determined position estimates, wherein the tracking data comprise position values of the light-emitting entity and time points corresponding to the position values, and wherein a tracking rate or a tracking time interval defined as the inverse of the tracking rate is obtained wherein the tracking steps are performed, such that each time interval between consecutive time points of the tracking data is equal to the tracking time interval or a multiple of the tracking time interval.

Providing tracking data comprising fixed time intervals based on a desired tracking rate or tracking time interval has the advantage that the tracking data are directly comparable to tracking data obtained by other methods, such as camera-based tracking data obtained at various frame rates. At the same time, illuminating the sample with the illumination light distribution comprising the local minimum and controlling the tracking steps based on a predefined light dose improves the photon efficiency of the method, protects the sample from photo damage and prolongs obtained trajectories by reduction of photo bleaching.

The term 'tracking' as used herein relates to determining the position of a light-emitting entity over time.

The term 'MINFLUX tracking' as used in the present specification designates a method for tracking a light-emitting entity in a sample comprising illuminating the sample at illumination positions in the vicinity of a position estimate of a light-emitting entity by focused illumination light having an illumination light distribution comprising a local intensity minimum and at least one intensity increasing area adjacent to the minimum, detecting detection light emitted from the light emitting entity in response to the illumination light for each of the illumination positions, and determining a new position estimate of the light-emitting entity based on the detection light. The local intensity minimum may be flanked by intensity increasing areas on either side of the local intensity minimum, such as, e.g., in a donut-shaped light distribution.

The term 'light-emitting entity' in the context of the present specification designates molecules, particles or molecular complexes emitting light in response to illumination light. For instance, the emitted light may be generated by reflection or scattering of the illumination light, or, in case the illumination light is excitation light adapted to excite the light-emitting entities, the emitted light may be luminescence light, particularly fluorescence light or phosphorescence light. The light-emitting entities may be single molecules, complexes or aggregates of molecules or particles. The light-emitting entity may itself emit light or contain one or several molecules emitting light in a complex, aggregate or particle. For example, in fluorescence microscopy, the light emitting entities may be fluorophores (small molecules or fluorescent macromolecules such as green fluorescent protein), or single molecules labeled with one or several fluorophores (e.g., proteins attached to one or several fluorophores by a chemical bond between amino acid sidechains and fluorophores or proteins bound to an antibody or similar moiety, wherein the antibody is labeled with a fluorophore). An example of a light reflecting particle is a gold nanoparticle. Fluorescent particles may be, e.g., quantum beads. Typically, the method according to the invention aims at tracking a single light-emitting entity. However, in some cases, more than one light-emitting entity may be tracked simultaneously, e.g., if the light-emitting entity are closely spaced and simultaneously emit light.

The sample is illuminated at the illumination positions in the vicinity of a position estimate of a light-emitting entity. Initially, the position estimate (an estimate of the position of the light-emitting entity in the sample) may be obtained by an independent method, e.g., widefield fluorescence microscopy, confocal scanning microscopy, or pinhole orbit scanning (see below). In particular, in all subsequent tracking steps, the position estimate, in the vicinity of which the illumination positions are placed, is the new position estimate obtained in the previous tracking step.

The term 'in the vicinity of a position estimate' particularly means that the illumination positions are placed in a circle or a sphere (particularly in case of 3D localization) around the position estimate. The radius of this circle or the sphere should be chosen large enough to ensure that the light-emitting molecule or entity is located within the circle with a high probability. If this is not the case, the position estimate obtained by the method described herein may become ambiguous, or in case of MINFLUX tracking, the light-emitting entity may be lost. The smallest circle which allows an unambiguous localization is also termed 'catch area'. On the other hand, the radius of the circle should not be too large to ensure that the light-emitting entity is within the illumination light distribution to obtain an emission signal at least for some illumination positions. The sample may be illuminated at the illumination positions stepwise or continuously. In case of continuous movement, an allocation of the detection light to the illumination positions may be achieved by adjusting a detector dwell time, over which the detection light is accumulated, similar to the adjustment of pixel sizes via the detector dwell time during line-scanning in confocal microscopy. In particular, the displacement of the focused illumination light relative to the sample may be achieved by beam displacement or beam scanning. In MINFLUX microscopy and MINFLUX tracking, electro-optic deflectors are typically used for fine positioning of the illumination focus and coarse positioning is mediated by a galvanometric scanner or piezo mirrors.

The illumination light is focused into the sample, particularly by a focusing device, such as an objective, to generate the illumination light distribution comprising the local minimum at the focus. In particular, the local intensity minimum of the illumination light distribution coincides with the geometric focus. In particular, the illumination light distribution is 2D-donut-shaped, i.e., the local minimum is surrounded by intensity maxima in the focal plane, or the illumination light distribution is 3D-donut-shaped (bottle-beam-shaped), i.e., the illumination light distribution is surrounded by intensity maxima in all three dimensions in space. Such light distributions can be generated, in particular, by phase modulation of the illumination light in a plane conjugated to the pupil plane of the focusing device (e.g., objective) using, e.g., a spatial light modulator or a phase plate. To generate a 2D donut at the focus, a vortex phase pattern may be used. A top hat-shaped phase pattern (also termed annular phase pattern) is suitable for generating a 3D donut at the focus.

In particular, the illumination light is excitation light configured to excite the light-emitting entities in the sample, such that they emit light, e.g., by luminescence (particularly fluorescence or phosphorescence). Alternatively, e.g., the illumination light may be reflected or scattered by the light-emitting entities. Yet alternatively, the illumination light may be depletion or switching light superimposed with excitation light, wherein the depletion or switching light is capable of depleting the excited state of the light-emitting entity, as known, e.g., from STED (stimulated emission depletion) microscopy, or switch the light-emitting entity into a non-emitting state, as known, e.g., from RESOLFT (reversable saturable optical linear fluorescence transitions) microscopy. A light distribution of depletion or switching light may be combined with a Gaussian shaped excitation light focus (particularly such that the maximum of the excitation light coincides with the local minimum of the depletion or switching light distribution), e.g., in a variant of the MINFLUX method, which may be termed STED-MINFLUX. According to this variant, both light distributions are subsequently placed at the illumination positions, the detection light is detected for each position, and a new position estimate is determined based on the detection light signals. In particular, in contrast to the commonly used MINFLUX approach (where an excitation light distribution with a local minimum is used), the detection light signal is maximal instead of minimal when the center of the light distribution is placed at the actual position of the light-emitting entity.

The detection light is particularly luminescence light (e.g., fluorescence or phosphorescence) or reflected light or scattered light. Such light may be picked up, e.g., by a confocal point detector, such as an avalanche photodiode, a photomultiplier or a hybrid detector. In particular, a photon count of the detection light is obtained by the detector.

The new position estimate of the light-emitting entity may be determined by a processor, e.g., by a maximum-likelihood algorithm as described in the prior art relating to MINFLUX localization and MINFLUX tracking. This calculation is based on the fact that the amount of detected light depends on the distance of the actual position of the light-emitting entity from the local minimum of the illumination light distribution.

The new position estimate is determined once the detection light exceeds a predefined light dose, particularly a predefined photon number. In other words, the photon detection ends and the calculation of a new position estimate is initiated when a certain preset photon number has been detected by the detector. This has the advantage that only as many photons as necessary are detected in each tracking step, which protects the sample from photo damage and avoids premature photo bleaching of the light-emitting entity. Notably, as explained below, the fact the new position estimate is calculated once the photon limit has been reached, does not necessarily mean that the current tracking step ends and a new tracking step is immediately initiated after this calculation, since the system may have to wait until the tracking time interval has passed before initiating a new tracking step.

Assuming a constant illumination pattern, the predefined light dose is a measure for the accuracy of the position determination. The detection light compared to the predefined light dose may be an absolute amount of detection light (e.g., an absolute photon number) or an amount of detection light over a background (e.g., a number of background photons). The background may be determined continuously during a measurement, e.g., as described in EP 3 951 470. Alternatively, the background may be estimated, e.g., from a so-called center-frequency-ratio (a ratio of the detection light detected from a central illumination position and the detection light detected from illumination positions forming a pattern around the central position).

In the method according to the invention, tracking data are generated from the determined position estimates by a processor, wherein the tracking data comprise position values of the light-emitting entity and time points corresponding to the position values. The position values are the position estimates obtained at the end of each tracking step. The time point corresponding to a position value may be obtained from a time stamp generated by, e.g., the processor or the detector. For instance, this time stamp may indicate the time of the first or last photon detection in the respective tracking step. Alternatively, the time point may be determined, e.g., as an average value of several time stamps obtained during the measurement.

According to the method described herein, a tracking rate or a tracking time interval is obtained, particularly by the processor. The tracking rate is defined as a number of tracking steps or time-position data points obtained by the method per unit of time (e.g., expressed in the unit kHz) and is equivalent to a frame rate of a camera in camera-based single particle tracking methods. Of course, instead of a tracking rate, the inverse of the tracking rate (a tracking time interval, e.g., expressed in the unit milliseconds or microseconds) can also be obtained.

The tracking rate or tracking time interval may be obtained from a user interface receiving a user entry of a desired value of the tracking rate or tracking time interval. For instance, a user could enter a desired tracking rate or tracking time interval via a user interface to obtain comparable data to a camera-based tracking system the user commonly utilizes for tracking experiments.

Alternatively, the tracking rate or the tracking time interval may be obtained from a memory (of the processor or a different processing unit), e.g., from a data base, e.g., based on system parameters. For example, the device used to execute the method according to the invention may also comprise a tracking camera for parallel camera-based tracking experiments, and the system parameters may indicate the frame rate of this camera. In this case, the system parameters could indicate that the applied tracking rate or tracking time interval should be equal to the camera frame rate (or integer multiples or divisors thereof) as stored in a system memory.

The tracking steps are performed in a temporal sequence determined by the tracking rate or tracking time interval. In particular, each tracking step is initiated after the tracking time interval or a multiple of the tracking time interval following the preceding tracking step or an initial tracking step. In particular, the initiation of a tracking step is the time point at which recording of detected light that is used for position determination is started. In particular, repositioning of the illumination light distribution in the vicinity of an estimated emitter position (e.g., in a pattern of illumination positions around this estimated emitter position) may occur at the time of initiating a new tracking step or before initiating a new tracking step. In particular, repositioning may occur immediately after a previous tracking step is finished, i.e. upon reaching the predefined photon budget. This may be advantageous, e.g., in view of beam deflector (e.g., EOD) repositioning times, settling times or the like.

This has the advantage, that the generated tracking data can be directly compared to e.g., camera-based tracking data without data processing, or that they can even be generated in parallel to camera-based tracking data.

In certain embodiments, a reference time point is determined for each of the tracking steps, wherein in each tracking step, after the new position estimate of the light-emitting entity has been determined, a subsequent tracking step is initiated when the tracking time interval or a multiple of the tracking time interval has passed starting from an initial reference time point or the preceding reference time point. In particular, the reference time point is determined in the same manner for each of the tracking steps according to a pre-determined algorithm. For example, the initial reference time point may coincide with the start of the measurement.

Since the position estimate is determined when the detection light exceeds a predefined light dose, the tracking steps normally take different amounts of time, depending on the fluctuating emission rate of the light-emitting entity/emitter. However, according to the present invention, in case the time taken for a given tracking step is shorter than the tracking time interval, the system waits until the tracking time interval has passed until the next tracking step is initiated. If this is the case for all tracking steps, the time points of the resulting tracking data are equidistant. In particular, the illumination light is shut off or attenuated during the waiting time to minimize photodamage to the sample and to avoid inducing photobleaching of the light-emitting entity/emitter. If, however, the predefined light dose has not been exceeded at the end of the tracking time interval, the measurement is continued until the predefined light dose has been reached, and the next tracking step is initiated after an integer multiple of the tracking time interval (e.g., twice the time interval). In this case, the tracking data will contain a gap, but still all data points will fit the predefined time grid and will be directly comparable to camera tracking data acquired with a frame rate equal to the tracking rate.

In certain embodiments, a trace or a trajectory of the light-emitting entity in the sample is determined based on the tracking data. Such a trace or trajectory can be visualized as a plurality of nodes indicating the position values obtained in the tracking steps, wherein nodes representing subsequent tracking steps are connected by lines. By means of traces, the movement of single particles in the sample can be visualized. Of course, it is also possible to determine several traces sequentially in a single, particularly automated, experiment. A trace typically ends once the tracked light-emitting entity is lost, e.g., due to photo bleaching, the end of an emittance burst or diffusion out of the catch area. Thereafter, in particular, a new light-emitting entity may be searched, pre-localized and tracked using the method according to the invention.

In certain embodiments, a time stamp is recorded for each of the tracking steps, wherein the tracking data are corrected based on the time stamp for deviations of the time points of the tracking data from the tracking rate or the tracking time interval. The time stamp may be generated, e.g., by the detector or by the processor, and may indicate a time of, e.g., the initiation of a tracking step, the end of the tracking step, the end of the position determination, the time of detection of the first photon in the tracking step or the last photon of the tracking step, or the like. The time stamps may be obtained from a clock, which may be internal or external to the processor. In particular, certain delays inherent to the control device controlling the tracking procedure may result in small deviation of the tracking steps from an ideal time grid. Such an ideal time grid may be needed for subsequent data processing steps. Using the time stamps, the data can be corrected for these delays to yield corrected data that are directly comparable to, e.g., camera-based tracking results. In particular, correcting the tracking data comprises shifting the time points of the tracking data without changing the position values. Alternatively, the time points may be shifted, and processed position values may be generated by interpolation.

In certain embodiments, each of the tracking steps comprises a plurality of sub steps, particularly an initial sub step and at least one subsequent sub step, wherein a position estimate is determined in each of the sub steps, and wherein particularly the illumination positions of the at least one subsequent sub step are determined based on the position estimate determined in the preceding sub step. In other words, the method is performed iteratively, as described, e.g., for certain MINFLUX methods in the prior art. This increases the final accuracy of the position determination in each tracking step.

In certain embodiments, the method comprises an initial tracking step comprising a first number of sub steps and at least one subsequent tracking step comprising a second number of sub steps, wherein the second number is smaller than the first number. In particular, the initial tracking step includes a pre-localization of the light-emitting entity by an independent method, e.g., widefield microscopy, confocal scanning microscopy, small-field-scanning with a Gaussian-shaped illumination light distribution, or pinhole orbit scanning. Pre-localization may also include searching for a (particularly single) light-emitting entity in the sample, i.e., the light-emitting entity may be simultaneously searched and localized. Alternatively, a separate search step may precede the pre-localization. In pinhole orbit scanning, the projection of a confocal detection pinhole in the sample is moved in a circular orbit, while the position of the illumination light distribution is kept constant relative to the sample using two separate beam deflection devices. During the orbit scan, detection light is detected, and the initial position estimate is determined from the detection light. The position estimate obtained by the pre-localization is then used to define the illumination positions in the next step. In the second tracking step and all subsequent tracking steps, at least the first sub-step (and optionally further sub-steps) can be omitted, since the position estimate obtained in the previous tracking step can be used to define the initial illumination positions in the next tracking step, particularly with higher accuracy compared to the pre-localization.

In certain embodiments, the reference time point is determined, for each tracking step, as the time point of initiation of a sub step of the tracking steps, particularly an initial sub step of the subsequent tracking steps. The initial reference time point may be determined as the time of initiation of the corresponding sub-step in the initial tracking step. In particular, this initial tracking step may include additional sub-steps before the initial reference time point, e.g., search and pre-localization steps or more generally steps which may be omitted in later tracking steps as a result of better prior knowledge about the actual location of the light-emitting entity.

Alternatively, the reference time point may be determined as a time point after the initiation of a certain sub step but having a deterministic relationship with the time of initiation of the respective sub step, such that the respective tracking step can be initiated at an appropriate time to adjust the tracking steps to the pre-defined time grid.

In certain embodiments, a distance of the illumination positions from the respective position estimate is reduced in at least one of the sub steps, particularly in at least one of the subsequent sub steps, more particularly in all of the subsequent sub steps. This distance is particularly a radius of a circle around the respective previous position estimate, on which the illumination positions are arranged. This circle can be made smaller in subsequent sub steps as the determined position of the light-emitting entity becomes more and more accurate, as known from certain MINFLUX methods described in the prior art.

In certain embodiments, a power of the illumination light is adjusted in at least one of the sub steps, particularly in at least one of the subsequent sub steps, wherein particularly the power is increased relative to the preceding sub step, wherein more particularly the power is increased while reducing the distance of the illumination positions from the respective position estimate. This so-called 'power-ramping' may be applied to compensate for the lower excitation intensity due to the closer distance of the light-emitting entity to the minimum of the illumination light distribution and acquire a sufficient amount of emitted photons to obtain a good signal-to-noise ratio.

In certain embodiments, the illumination positions form a pattern, particularly a polygon, centered at the position estimate of the light-emitting entity. The subject matter of this disclosure is not restricted to regular (e.g., polygon-shaped) patterns. Irregular and even random patterns may also be used. In particular, the pattern may be a 2D pattern arranged in a focal plane extending perpendicular to an optical axis along which the illumination light propagates.

In certain embodiments, the pattern is a hexagon or a triangle.

In certain embodiments, the pattern comprises at least three illumination positions defining a plane (particularly a focal plane arranged perpendicular to an optical axis of the illumination light beam), and at least one additional illumination position arranged outside of the plane. In particular, at least two additional illumination positions are provided on opposite sides of the plane (e.g., above and below the focal plane). Such a pattern may advantageously be used for 3D MINFLUX tracking. To obtain a 3D pattern, the focus of the illumination light may be displaced relative to the sample, e.g., by a deformable mirror, as known from certain MINFLUX methods described in the prior art.

In certain embodiments, the pattern further comprises a central position located at the position estimate of the light-emitting entity, particularly in at least one of the sub steps. The detection light obtained from the central position may or may not be used in the determination of the position estimate. In general, a lower photon count from the central position compared to the peripheral illumination positions will be obtained if the illumination light distribution comprising the local minimum is an excitation light distribution. In particular, the detection light detected from the central position may be used as a control to distinguish the emission signal of the light-emitting entity from background light.

In certain embodiments, a center-frequency ratio is determined, wherein the center-frequency-ratio is a ratio of the detection light detected from the central illumination position and the detection light detected from the illumination positions forming the pattern around the central position, particularly weighted by respective dwell times of the illumination light distribution at the respective illumination positions. For instance, a threshold of the center-frequency ratio may be set, and the tracking procedure may be aborted or halted if the center-frequency ratio exceeds the threshold (indicating background light above an acceptable level).

A second aspect of the invention relates to a device, particularly a light microscope, more particularly a MINFLUX microscope, for tracking a light-emitting entity in a sample, particularly by the method according to the first aspect, comprising illumination optics configured to illuminate a sample in a plurality of tracking steps at illumination positions in the vicinity of a position estimate of a light-emitting entity by focused illumination light having an illumination light distribution comprising a local intensity minimum and at least one intensity increasing area adjacent to the minimum, a detector configured to detect detection light emitted from the light emitting entity in response to the illumination light for each of the illumination positions, and a processor configured to determine a new position estimate of the light-emitting entity based on the detection light once the detection light exceeds a predefined light dose, wherein the processor is further configured to generate tracking data from the determined position estimates, wherein the tracking data comprise position values of the light-emitting entity and time points corresponding to the position values, and wherein the processor is configured to obtain a tracking rate or a tracking time interval.

The device comprises a control device.

The control device is configured to cause the illumination optics, the detector and the processor to perform the tracking steps, such that each time interval between consecutive time points is equal to the tracking time interval or a multiple of the tracking time interval.

The control device and the processor may be incorporated in the same device or different devices. In particular, such a device may be a general-purpose computer or an application-specific computer such as a microprocessor, a field-programmable gate array (FPGA) or an application-specific integrated circuit.

In certain embodiments, the illumination optics comprise at least one light source (particularly a pulsed or continuous laser source) for generating an illumination light beam, a focusing device, particularly an objective, for focusing the illumination light beam into the sample, a beam shaping device for generating the illumination light distribution comprising the local minimum, and/or a beam displacement device configured to illuminate the sample with the illumination light at the illumination positions.

In particular, the beam displacement device comprises a scanner, particularly a mechanical scanner, more particularly a galvanometric scanner, and a beam deflection device, particularly comprising at least one electro-optic deflector or acousto-optic deflector, wherein the scanner and the beam deflection device are configured to displace the illumination light beam to illuminate the sample at the illumination positions.

In certain embodiments, the device for tracking the light-emitting entity in the sample further comprises an axial scanning device configured to move a focus position of the illumination light in the sample in an axial direction parallel to an optical axis, along which the illumination light propagates. In particular, the axial scanning device is a deformable mirror.

In certain embodiments, the device for tracking the light-emitting entity in the sample comprises an input device configured to receive a user input indicating the tracking rate or the tracking time interval.

The control device is configured to perform the tracking steps in a temporal sequence determined by the tracking rate or the tracking time interval.

In certain embodiments, the control device or the processor is configured to determine a reference time point for each of the tracking steps, wherein in each tracking step, after the processor has determined the new position estimate of the light-emitting entity, the control device is configured to initiate a subsequent tracking step when the tracking time interval or a multiple of the tracking time interval has passed starting from an initial reference time point.

In certain embodiments, the control device or the processor is configured to record a time stamp for each of the tracking steps, wherein the processor is configured to correct the tracking data based on the time stamp for deviations of the tracking data from the tracking rate or the tracking time interval.

In certain embodiments, the control device is configured to execute a plurality of sub steps, particularly an initial sub step and at least one subsequent sub step, in each of the tracking steps, wherein the processor is configured to determine a position estimate in each of the sub steps, and wherein particularly the processor is configured to determine the illumination positions of the at least one subsequent sub step based on the position estimate determined in the preceding sub step.

In certain embodiments, the control device is configured to execute an initial tracking step comprising a first number of sub steps and at least one subsequent tracking step comprising a second number of sub steps, wherein the second number is smaller than the first number.

In certain embodiments, the processor or the control device is configured to determine the reference time point as the time point of initiation of a sub step of the tracking steps, particularly an initial sub step of the subsequent tracking steps.

In certain embodiments, the control device is configured to cause the illumination optics, particularly the beam displacement device, to reduce a distance of the illumination positions from the respective position estimate in at least one of the subsequent sub steps, particularly in all of the subsequent sub steps.

In certain embodiments, the control device is configured to cause the illumination optics, particularly the light source, to adjust a power of the illumination light in the subsequent sub step, wherein particularly the control device is configured to cause the illumination optics to increase the power in the subsequent sub steps relative to the preceding sub step.

In certain embodiments, the control device is configured to cause the illumination optics, particularly the beam displacement device, to illuminate the sample at illumination positions forming a pattern, particularly a polygon, centered at the position estimate of the light-emitting entity, wherein particularly the pattern is a hexagon or a triangle.

In certain embodiments, the control device is configured to cause the illumination optics, particularly the beam deflection device, to illuminate the sample at a central position located at the position estimate of the light-emitting entity, particularly in at least one of the sub steps.

In certain embodiments, the processor is configured to determine a center-frequency ratio, wherein the center-frequency-ratio is a ratio of the detection light detected from the central illumination position and the detection light detected from the illumination positions forming the pattern around the central position, particularly weighted by respective dwell times of the illumination light distribution at the respective illumination positions.

A third aspect of the invention relates to a computer program comprising program code configured to cause the device according to the second aspect to execute the method according to the first aspect.

Further embodiments of the device according to the second aspect, and the computer program according to the third aspect have already been mentioned in connection with the method according to the first aspect.

Further embodiments of the invention may be derived from the claims, the description and the drawings. Therein, the claims are not to be construed in a manner such that only subjects, devices or methods respectively comprising all or none of the features of a sub claim in addition to the features of the independent claims and aspects described herein, may be possible embodiments of the invention. In contrast, further embodiments may be drawn from features stated in the description or derivable from the drawings which may be singly or cumulatively applied.

### Short description of the figures

The invention is further elucidated and described hereafter with reference to the exemplary embodiments displayed in the figures. These embodiments are non-restrictive examples which are not meant to limit the scope of the invention.
- Fig. 1: shows a device for tracking a light-emitting entity in a sample according to the invention;
- Fig. 2: shows plots illustrating a first embodiment of the invention;
- Fig. 3: shows plots illustrating an alternative method outside the scope of the invention.

### Description of the figures

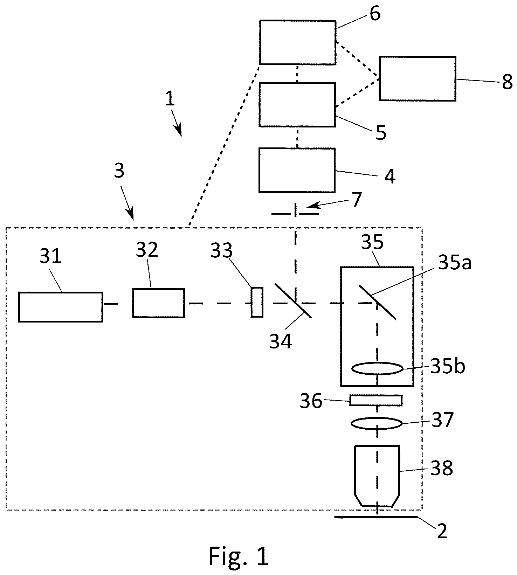

Fig. 1 shows a device 1 according to the invention for tracking a light-emitting entity in a sample 2, the device 1 being a light microscope, particularly a MINFLUX microscope adapted for MINFLUX tracking. The device 1 comprises illumination optics 3 for illuminating the sample 2 with an illumination light distribution comprising a central local minimum (e.g., a 2D donut or a 3D donut) at illumination positions in the sample 2 in the vicinity of a previously determined position estimate of the light-emitting entity, a detector 4 for detecting detection light emitted by the light-emitting entity in the sample 2 in response to the illumination light, and a processor 5 for determining a new position estimate based on the detected detection light and the corresponding positions of the local minimum of the illumination light distribution.

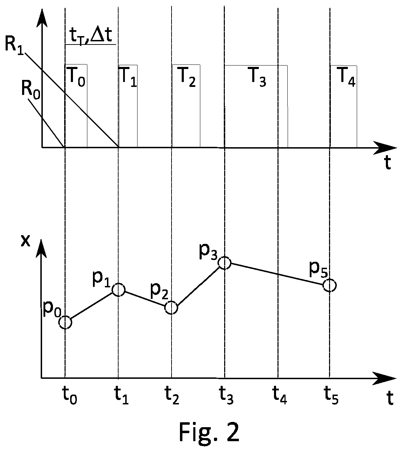

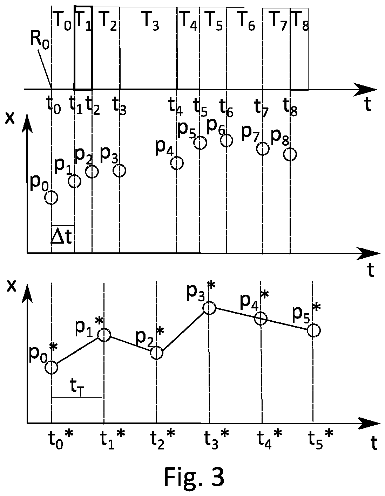

The processor 5 is further configured to generate tracking data comprising time points tᵢ and corresponding position values pᵢ obtained from the position estimates (see Fig. 2 and 3). A control device 6 is configured to control the illumination optics 3, the detector 4 and the processor 5 to perform a plurality of tracking steps Tᵢ (see Fig. 2 and 3), wherein in each of the tracking steps Tᵢ, a position value pᵢ is determined.

In particular, the illumination light is excitation light adapted to excite the light-emitting entities in the sample 2, such that they emit luminescence light, particularly fluorescence light, which is picked up by the detector 4. The detector 4 may be configured to detect single photons of the emitted light, such that a photon count can be obtained.

The illumination optics 3 comprise a light source 31, particularly a laser source, configured to generate an illumination light beam, a beam deflection device 32, particularly comprising electro-optic deflectors or acousto-optic deflectors, for deflecting the illumination light beam, and a beam shaping device 33 configured to shape the illumination light beam, particularly by phase modulation, to generate the illumination light distribution comprising the local minimum (e.g., a donut-shaped light distribution) at the focus in the sample 2. For example, the beam shaping device 33 may be a spatial light modulator or a phase plate. The beam shaping device 33 may be arranged at a position in the beam path which is conjugated to a pupil plane of the objective 38 focusing the illumination light beam. Subsequently, the illumination light beam passes a dichroic mirror 34 which is transmissive for the illumination light but reflective for the detection light, a scanner 35, e.g., a galvanometric scanner comprising a rotatable scan mirror 35a and a scan lens 35b, for lateral scanning of the illumination light beam over the sample 2, an axial scanning device 36 for displacing an axial focus position of the illumination light, e.g., a deformable mirror, and a tube lens 37, and is focused into the sample 2 by the objective 38.

Detection light emitted by the light-emitting entity in the sample 2 is de-scanned by the scanner 35, reflected by the dichroic mirror 34 and reaches the detector 4 via the pinhole 7.

According to an example of a MINFLUX tracking procedure performed by the device 1, a single light-emitting entity in the sample 2 is first searched and a coarse pre-localization step is performed. Search and pre-localization may be performed simultaneously, e.g., by confocal scanning microscopy, widefield microscopy or pinhole orbit scanning. This step typically involves coarse positioning of the illumination light beam by the scanner 35. Once an initial position estimate has been determined in the pre-localization step, the central minimum of the illumination light distribution is subsequently placed by the beam deflection device 32 at illumination positions forming a pattern, e.g., a hexagon or a triangle, arranged around a center defined by the position estimate. A photon count is obtained based on the detection light picked up by the detector 4 for each illumination position, and a new position estimate is determined by the processor 5 from the photon counts and the corresponding coordinates of the illumination positions, e.g., using a maximum-likelihood algorithm.

In a given tracking step, the described process may be repeated iteratively, i.e., a number of sub-steps of the tracking step may be performed, wherein the position estimate of the preceding sub step is used to define the center of the pattern of illumination positions. In particular, in each sub-step, the radius of a circle around the current position estimate, on which the illumination positions are arranged, is reduced in each of the sub steps, and the power of the illumination light beam is concomitantly increased.

In particular, the illumination light beam is re-centered to the current position estimate by the scanner 35 (e.g., the galvo scanner) in some of the tracking steps or each tracking step, more particularly each sub step, wherein the displacement of the illumination light beam to the illumination positions around the center is mediated by the beam deflection device 32 (e.g., the electro-optic deflectors).

The current tracking step is finished once a predefined photon number has been detected by the detector 4, and the current position estimate is recorded as the position value pᵢ of the tracking step Tᵢ. Whereas in the first tracking step Tᵢ, an *ab initio* position determination is necessary, the position value pᵢ of the last tracking step Tᵢ can be used as an initial center of the pattern of illumination positions in the subsequent tracking steps Tᵢ. Thus, it may be possible to omit at least one of the sub steps starting from the second tracking step Tᵢ.

The processor 5 is configured to obtain a tracking rate, e.g., a desired tracking rate entered by a user via the input device 8 which is connected to the processor 5 and the control device 6.

The processor 5 is further configured to perform the tracking steps Tᵢ, such that time interval Δt between consecutive time points tᵢ is equal to the tracking time interval t_{T} or a multiple of the tracking time interval t_{T}. In other words, the tracking steps are performed at fixed time intervals determined by the tracking rate (see Fig. 2).

Fig. 2 shows plots illustrating the method according to the invention, in which the tracking steps Tᵢ are performed by the control device 6 in a sequence defined by the tracking rate. In the upper plot depicted in Fig. 2, the tracking steps T₀ to T₄ are illustrated as boxes. The width of a box indicates the duration of the respective tracking step Tᵢ (see the abscissa of the plot indicating the time t). The durations of the tracking steps Tᵢ are different from each other, since the pre-set photon number is reached after different times due to the fluctuating emission rate of the light-emitting entity. In the depicted example, the start of each tracking step Tᵢ serves as a reference time point Rᵢ. All subsequent tracking steps Tᵢ start after a time interval Δt equal to the tracking time interval t_{T} (the inverse of the tracking rate) or a multiple of the tracking time interval t_{T} after the initial reference time point R₀.

In the lower plot, the x-coordinate of the corresponding position values pᵢ are depicted, which (particularly together with y-coordinates and/or z-coordinates, if applicable) may be used to generate a trajectory of the light-emitting entity in the sample 2.

If the pre-set photon number is reached before the end of the tracking time interval t_{T}, as in the tracking steps T₀, T₁, T₂ and T₄, this is achieved by waiting until the end of the tracking time interval t_{T} before the next tracking step is initiated. In particular, the illumination light may be shut off or attenuated during the waiting time to avoid inducing photo damage or photo bleaching.

If, however, the photon budget has not been reached at the end of the tracking time interval t_{T}, as illustrated for the tracking step T₃ shown in Fig. 2, the next tracking step (here T₄) is initiated after twice the tracking time interval t_{T}. Accordingly, as shown in the lower plot, no position value pᵢ is allocated to the time point t₄, and the position value p₅ corresponding to the time point t₅ is obtained from the tracking step T₄.

The resulting tracking data can be directly compared to camera tracking data obtained with a frame rate equal to the tracking rate.

Fig. 3 shows plots illustrating an alternative of the method outside of the scope of the invention, in which the tracking data are processed, wherein the time points tᵢ are shifted, such that the time intervals Δt between consecutive time points tᵢ of the tracking data are equal to the tracking time interval t_{T} or a multiple of the tracking time interval t_{T}, and wherein processed position values pᵢ* are determined by interpolation based on the original position values pᵢ and the shifted time points tᵢ.

The upper plot of Fig. 3 illustrates the tracking steps T₀ to T₈ as boxes, the width of which represents the length of the respective tracking step, similar to Fig. 2. Also, in this alternative, the length of the tracking steps, and the corresponding time intervals Δt differ from each other, because the pre-set photon number is achieved after different times in each step. However, here, once a tracking step Tᵢ is finished, the next tracking step Tᵢ is immediately initiated, such that position data pᵢ on an irregular time grid are obtained (see middle plot). Using the obtained tracking rate, the tracking data are converted to a regular time grid, by shifting the time points tᵢ (thereby obtaining shifted time points tᵢ* and obtaining processed position values pᵢ* by interpolation, see lower plot). The resulting tracking data can be directly compared to camera tracking data obtained with a frame rate equal to the tracking rate.

### List of reference signs

- 1: Device for tracking a light-emitting entity in a sample
- 2: Sample
- 3: Illumination optics
- 4: Detector
- 5: Processor
- 6: Control device
- 7: Pinhole
- 8: Input device
- 31: Light source
- 32: Beam deflection device
- 33: Beam shaping device
- 34: Dichroic mirror
- 35: Scanner
- 35a: Scan mirror
- 35b: Scan lens
- 36: Axial scanning device
- 37: Tube lens
- 38: Objective
- pᵢ: Position value
- pᵢ*: Processed position value
- Tᵢ: Tracking step
- tᵢ: Time point
- tᵢ*: Shifted time point
- Rᵢ: Reference time point
- R₀: Initial reference time point
- t_{T}: Tracking time interval
- ΔT: Time interval

## Claims

1. A method for tracking a light-emitting entity in a sample (2), wherein in a plurality of tracking steps (Tᵢ),
- the sample (2) is illuminated at illumination positions in the vicinity of a position estimate of a light-emitting entity by focused illumination light having an illumination light distribution comprising a local intensity minimum and at least one intensity increasing area adjacent to the minimum,
- detection light emitted from the light emitting entity in response to the illumination light is detected for each of the illumination positions,
- a new position estimate of the light-emitting entity is determined based on the detection light once the detection light exceeds a predefined light dose, and
- tracking data are generated from the determined position estimates, wherein the tracking data comprise position values (pᵢ) of the light-emitting entity and time points (tᵢ) corresponding to the position values (pᵢ),
**characterized in that**
a tracking rate or a tracking time interval (t_{T}) defined as the inverse of the tracking rate is obtained, wherein the tracking steps (Tᵢ) are performed, such that each time interval (Δt) between consecutive time points (tᵢ) is equal to the tracking time interval (t_{T}) or a multiple of said tracking time interval (t_{T}), wherein the tracking steps (Tᵢ) are performed in a temporal sequence determined by the tracking rate or the tracking time interval (t_{T}).

2. The method according to claim 1, **characterized in that** a reference time point (Rᵢ) is determined for each of the tracking steps (Tᵢ), wherein in each tracking step (Tᵢ), after the new position estimate of the light-emitting entity has been determined, a subsequent tracking step (Tᵢ) is initiated when the tracking time interval (t_{T}) or a multiple of said tracking time interval (t_{T}) has passed starting from an initial reference time point (R₀).

3. The method according to claim 1 or 2, **characterized in that** a time stamp is recorded for each of the tracking steps (Tᵢ), wherein the tracking data are corrected based on the time stamp for deviations of the time points (tᵢ) of the tracking data from the tracking rate or the tracking time interval (t_{T}).

4. The method according to any one of the preceding claims, **characterized in that** each of the tracking steps (Tᵢ) comprises a plurality of sub steps, particularly an initial sub step and at least one subsequent sub step, wherein a position estimate is determined in each of the sub steps, and wherein particularly the illumination positions of the at least one subsequent sub step are determined based on the position estimate determined in the preceding sub step.

5. The method according to claim 4, **characterized in that** the method comprises an initial tracking step (Tᵢ) comprising a first number of sub steps and at least one subsequent tracking step (Tᵢ) comprising a second number of sub steps, wherein the second number is smaller than the first number.

6. The method according to claim 4 or 5 when referring back to claim 2, **characterized in that** the reference time point (Rᵢ) is determined as the time point of initiation of a sub step of the tracking steps (Tᵢ), particularly an initial sub step of the subsequent tracking steps (Tᵢ).

7. The method according to one of the claims 4 to 6, **characterized in that** a distance of the illumination positions from the respective position estimate is reduced in at least one of the sub steps, particularly in at least one of the subsequent sub steps, more particularly in all of the subsequent sub steps.

8. The method according to one of the claims 4 to 7, **characterized in that** a power of the illumination light is adjusted in at least one of the sub steps, particularly in at least one of the subsequent sub steps, wherein particularly the power is increased steps relative to the preceding sub step.

9. The method according to one of the preceding claims, **characterized in that** the illumination positions form a pattern, particularly a polygon, centered at the position estimate of the light-emitting entity.

10. The method according to claim 9, **characterized in that** the pattern is a hexagon or a triangle.

11. The method according to claim 9, **characterized in that** the pattern comprises at least three illumination positions defining a plane, and at least one additional illumination position arranged outside of the plane.

12. A device (1) for tracking a light-emitting entity in a sample (2), particularly by the method according to one of the claims 1 to 11, comprising
- illumination optics (3) configured to illuminate a sample (2) in a plurality of tracking steps (Tᵢ) at illumination positions in the vicinity of a position estimate of a light-emitting entity by focused illumination light having an illumination light distribution comprising a local intensity minimum and at least one intensity increasing area adjacent to the minimum,
- a detector (4) configured to detect detection light emitted from the light emitting entity in response to the illumination light for each of the illumination positions, and
- a processor (5) configured to determine a new position estimate of the light-emitting entity based on the detection light once the detection light exceeds a predefined light dose, wherein the processor (5) is further configured to generate tracking data from the determined position estimates, wherein the tracking data comprise position values (pᵢ) of the light-emitting entity and time points (tᵢ) corresponding to the position values (pᵢ),
**characterized in that**
the processor (5) is configured to obtain a tracking rate or a tracking time interval (t_{T}) defined as the inverse of the tracking rate, wherein the device (1) comprises a control device (6) configured to perform the tracking steps (Tᵢ) in a temporal sequence determined by the tracking rate or the tracking time interval (t_{T}), such that each time interval (Δt) between consecutive time points (tᵢ) is equal to the tracking time interval (t_{T}) or a multiple of the tracking time interval (t_{T}).

13. A computer program comprising program code configured to cause the device (1) according to claim 12 to execute the method according to one of the claims 1 to 11.

## Patentansprüche

1. Verfahren zum Verfolgen einer lichtemittierenden Einheit in einer Probe (2), wobei in einer Mehrzahl von Verfolgungsschritten (Tᵢ),
- die Probe (2) an Beleuchtungspositionen in der Nähe einer Positionsschätzung einer lichtemittierenden Einheit durch fokussiertes Beleuchtungslicht beleuchtet wird, das eine Beleuchtungslichtverteilung aufweist, die ein lokales Intensitätsminimum und mindestens einen an das Minimum angrenzenden Intensitätsanstiegsbereich umfasst,
- Detektionslicht, das von der lichtemittierenden Einheit als Reaktion auf das Beleuchtungslicht emittiert wird, für jede der Beleuchtungspositionen erfasst wird,
- eine neue Positionsschätzung der lichtemittierenden Einheit basierend auf dem Detektionslicht bestimmt wird, sobald das Detektionslicht eine vordefinierte Lichtdosis überschreitet, und
- aus den bestimmten Positionsschätzungen Verfolgungsdaten erzeugt werden, wobei die Verfolgungsdaten Positionswerte (pᵢ) der lichtemittierenden Einheit und den Positionswerten (pᵢ) zugeordnete Zeitpunkte (tᵢ) umfassen,
**dadurch gekennzeichnet,**
**dass** eine Verfolgungsrate oder ein Verfolgungszeitintervall (t_{T}), das als der Kehrwert der Verfolgungsrate definiert ist, erhalten wird, wobei die Verfolgungsschritte (Tᵢ) so durchgeführt werden, dass jedes Zeitintervall (Δ t) zwischen aufeinanderfolgenden Zeitpunkten (tᵢ) gleich dem Verfolgungszeitintervall (t_{T}) oder einem Vielfachen des Verfolgungszeitintervalls (t_{T}) ist, wobei die Verfolgungsschritte (Tᵢ) in einer zeitlichen Reihenfolge durchgeführt werden, die durch die Verfolgungsrate oder das Verfolgungszeitintervall (t_{T}) bestimmt ist.

2. Verfahren nach Anspruch 1, **dadurch gekennzeichnet, dass** für jeden der Verfolgungsschritte (Tᵢ) ein Referenzzeitpunkt (Rᵢ) bestimmt wird, wobei in jedem Verfolgungsschritt (Tᵢ), nachdem die neue Positionsschätzung der lichtemittierenden Einheit bestimmt worden ist, ein nachfolgender Verfolgungsschritt (Tᵢ) eingeleitet wird, wenn das Verfolgungszeitintervall (t_{T}) oder ein Vielfaches des Verfolgungszeitintervalls (t_{T}) ausgehend von einem anfänglichen Referenzzeitpunkt (R₀) vergangen ist.

3. Verfahren nach Anspruch 1 oder 2, **dadurch gekennzeichnet, dass** für jeden der Verfolgungsschritte (Tᵢ) ein Zeitstempel aufgezeichnet wird, wobei die Verfolgungsdaten auf der Grundlage des Zeitstempels auf Abweichungen der Zeitpunkte (tᵢ) der Verfolgungsdaten von der Verfolgungsrate oder dem Verfolgungszeitintervall (t_{T}) korrigiert werden.

4. Verfahren nach einem der vorhergehenden Ansprüche, **dadurch gekennzeichnet, dass** jeder der Verfolgungsschritte (Tᵢ) eine Mehrzahl von Teilschritten, insbesondere einen anfänglichen Teilschritt und mindestens einen nachfolgenden Teilschritt, umfasst, wobei in jedem der Teilschritte eine Positionsschätzung ermittelt wird, und wobei insbesondere die Beleuchtungspositionen des mindestens einen nachfolgenden Teilschrittes auf der Grundlage der im vorhergehenden Teilschritt ermittelten Positionsschätzung ermittelt werden.

5. Verfahren nach Anspruch 4, **dadurch gekennzeichnet, dass** das Verfahren einen anfänglichen Verfolgungsschritt (Tᵢ) mit einer ersten Anzahl von Teilschritten und mindestens einen nachfolgenden Verfolgungsschritt (Tᵢ) mit einer zweiten Anzahl von Teilschritten umfasst, wobei die zweite Anzahl kleiner ist als die erste Anzahl.

6. Verfahren nach Anspruch 4 oder 5, soweit rückbezogen auf Anspruch 2, **dadurch gekennzeichnet, dass** der Referenzzeitpunkt (Rᵢ) als Zeitpunkt des Beginns eines Teilschritts der Verfolgungsschritte (Tᵢ), insbesondere eines anfänglichen Teilschritts der nachfolgenden Verfolgungsschritte (Tᵢ), bestimmt wird.

7. Verfahren nach einem der Ansprüche 4 bis 6, **dadurch gekennzeichnet, dass** in mindestens einem der Teilschritte, insbesondere in mindestens einem der nachfolgenden Teilschritte, weiter insbesondere in allen nachfolgenden Teilschritten, ein Abstand der Beleuchtungspositionen von der jeweiligen Positionsschätzung verringert wird.

8. Verfahren nach einem der Ansprüche 4 bis 7, **dadurch gekennzeichnet, dass** in mindestens einem der Teilschritte, insbesondere in mindestens einem der nachfolgenden Teilschritte, eine Leistung des Beleuchtungslichtes eingestellt wird, wobei insbesondere die Leistung gegenüber dem vorhergehenden Teilschritt stufenweise erhöht wird.

9. Verfahren nach einem der vorhergehenden Ansprüche, **dadurch gekennzeichnet, dass** die Beleuchtungspositionen ein Muster, insbesondere ein Polygon, bilden, das auf die Positionsschätzung der lichtemittierenden Einheit zentriert ist.

10. Verfahren nach Anspruch 9, **dadurch gekennzeichnet, dass** das Muster ein Sechseck oder ein Dreieck ist.

11. Verfahren nach Anspruch 9, **dadurch gekennzeichnet, dass** das Muster mindestens drei Beleuchtungspositionen die eine Ebene definieren, und mindestens eine zusätzliche Beleuchtungsposition, die außerhalb der Ebene angeordnet ist, umfasst.

12. Vorrichtung (1) zur Verfolgung einer lichtemittierenden Einheit in einer Probe (2), insbesondere nach dem Verfahren gemäß einem der Ansprüche 1 bis 11, umfassend
- Beleuchtungsoptik (3), die dazu ausgebildet ist, eine Probe (2) in einer Mehrzahl von Verfolgungsschritten (Tᵢ) an Beleuchtungspositionen in der Nähe einer Positionsschätzung einer lichtemittierenden Einheit durch fokussiertes Beleuchtungslicht zu beleuchten, das eine Beleuchtungslichtverteilung aufweist, die ein lokales Intensitätsminimum und mindestens einen an das Minimum angrenzenden Intensitätsanstiegsbereich umfasst,
- einen Detektor (4), der dazu ausgebildet ist, für jede der Beleuchtungspositionen Detektionslicht zu erfassen, das von der lichtemittierenden Einheit als Reaktion auf das Beleuchtungslicht emittiert wird, und
- einen Prozessor (5), der dazu ausgebildet ist, eine neue Positionsschätzung der lichtemittierenden Einheit auf Basis des Detektionslichts zu bestimmen, sobald das Detektionslicht eine vordefinierte Lichtdosis überschreitet, wobei der Prozessor (5) ferner dazu ausgebildet ist, Verfolgungsdaten aus den bestimmten Positionsschätzungen zu erzeugen, wobei die Verfolgungsdaten Positionswerte (pᵢ) der lichtemittierenden Einheit und den Positionswerten (pᵢ) zugeordnete Zeitpunkte (tᵢ) umfassen,
**dadurch gekennzeichnet,**
**dass** der Prozessor (5) dazu ausgebildet ist, eine Verfolgungsrate oder ein Verfolgungszeitintervall (t_{T}) zu erhalten, das als der Kehrwert der Verfolgungsrate definiert ist, wobei die Vorrichtung (1) eine Steuervorrichtung (6) umfasst, die dazu ausgebildet ist, die Verfolgungsschritte (Tᵢ) in einer zeitlichen Abfolge durchzuführen, die durch die Verfolgungsrate oder das Verfolgungszeitintervall (t_{T}) bestimmt ist, so dass jedes Zeitintervall (Δτ) zwischen aufeinanderfolgenden Zeitpunkten (tᵢ) gleich dem Verfolgungszeitintervall (t_{T}) oder einem Vielfachen des Verfolgungszeitintervalls (t_{T}) ist.

13. Computerprogramm aufweisend Programmcode, der dazu ausgebildet ist, die Vorrichtung (1) nach Anspruch 12 zu veranlassen, das Verfahren nach einem der Ansprüche 1 bis 11 auszuführen.

## Revendications

1. Procédé de suivi d'une entité émettrice de lumière dans un échantillon (2), dans laquelle, au cours d'une pluralité d'étapes de suivi (Tᵢ),
- l'échantillon (2) est illuminé à des positions d'illumination à proximité d'une estimation de la position d'une entité émettrice de lumière par une lumière d'illumination focalisée ayant une distribution de lumière d'illumination comprenant un minimum d'intensité locale et au moins une zone d'augmentation de l'intensité adjacente au minimum,
- la lumière de détection émise par l'entité émettrice de lumière en réponse à la lumière d'illumination est détectée pour chacune des positions d'illumination,
- une nouvelle estimation de la position de l'entité émettrice de lumière est déterminée sur la base de la lumière de détection une fois que la lumière de détection dépasse une dose de lumière prédéfinie, et
- des données de suivi sont générées à partir des estimations de position déterminées, les données de suivi comprenant des valeurs de position (pᵢ) de l'entité émettrice de lumière et des points temporels (tᵢ) correspondant aux valeurs de position (pᵢ),
**caractérisé en ce que**
on obtient un taux de suivi ou un intervalle de temps de suivi (t_{T}) défini comme l'inverse du taux de suivi, dans lequel les étapes de suivi (Tᵢ) sont effectuées, de sorte que chaque intervalle de temps (Δt) entre des points de temps consécutifs (tᵢ) est égal à l'intervalle de temps de suivi (t_{T}) ou à un multiple de cet intervalle de temps de suivi (t_{T}), dans lequel les étapes de suivi (Tᵢ) sont effectuées dans une séquence temporelle déterminée par le taux de suivi ou l'intervalle de temps de suivi (t_{T}).

2. Procédé selon la revendication 1, **caractérisée en ce qu'**un point temporel de référence (Rᵢ) est déterminé pour chacune des étapes de suivi (Tᵢ), où dans chaque étape de suivi (Tᵢ), après que la nouvelle estimation de la position de l'entité émettrice de lumière a été déterminée, une étape de suivi ultérieure (Tᵢ) est lancée lorsque l'intervalle de temps de suivi (t_{T}) ou un multiple de cet intervalle de temps de suivi (t_{T}) s'est écoulé à partir d'un point temporel de référence initial (R₀).

3. Procédé selon la revendication 1 ou 2, **caractérisée en ce qu'**un horodatage est enregistré pour chacune des étapes de suivi (Tᵢ), dans laquelle les données de suivi sont corrigées sur la base de l'horodatage pour les écarts des points temporels (tᵢ) des données de suivi par rapport au taux de suivi ou à l'intervalle de temps de suivi (t_{T}).

4. Procédé selon l'une des revendications précédentes, **caractérisée en ce que** chacune des étapes de suivi (Tᵢ) comprend plusieurs sous-étapes, en particulier une sous-étape initiale et au moins une sous-étape ultérieure, dans laquelle une estimation de la position est déterminée dans chacune des sous-étapes, et dans laquelle en particulier les positions d'illumination de la sous-étape ultérieure au moins sont déterminées sur la base de l'estimation de la position déterminée dans la sous-étape précédente.

5. Procédé selon la revendication 4, **caractérisée en ce que** le procédé comprend une étape de suivi initiale (Tᵢ) comprenant un premier nombre de sous-étapes et au moins une étape de suivi ultérieure (Tᵢ) comprenant un deuxième nombre de sous-étapes, le deuxième nombre étant plus petit que le premier.

6. Procédé selon la revendication 4 ou 5 en référence à la revendication 2, **caractérisée en ce que** le point temporel de référence (Rᵢ) est déterminé comme le point temporel d'initiation d'une sous-étape des étapes de suivi (Tᵢ), en particulier une sous-étape initiale des étapes de suivi ultérieures (Tᵢ).

7. Procédé selon l'une des revendications 4 à 6, **caractérisée en ce qu'**une distance entre les positions d'illumination et l'estimation de la position respective est réduite dans au moins une des sous-étapes, en particulier dans au moins une des sous-étapes suivantes, plus particulièrement dans toutes les sous-étapes suivantes.

8. Procédé selon l'une des revendications 4 à 7, **caractérisé en ce qu'**une puissance de la lumière d'illumination est ajustée dans au moins une des sous-étapes, en particulier dans au moins une des sous-étapes suivantes, où la puissance est particulièrement augmentée progressivement par rapport à la sous-étape précédente.

9. Procédé selon l'une des revendications précédentes, **caractérisé en ce que** les positions d'illumination forment un motif, en particulier un polygone, centré sur l'estimation de la position de l'entité émettrice de lumière.

10. Procédé selon la revendication 9, **caractérisée en ce que** le motif est un hexagone ou un triangle.

11. Procédé selon la revendication 9, **caractérisée en ce que** le motif comprend au moins trois positions d'illumination définissant un plan, et au moins une position d'illumination supplémentaire disposée à l'extérieur du plan.

12. Dispositif (1) de suivi d'une entité émettrice de lumière dans un échantillon (2), en particulier par le procédé selon l'une des revendications 1 à 11, comprenant
- une optique d'illumination (3) configurée pour illuminer un échantillon (2) en plusieurs étapes de suivi (Tᵢ) à des positions d'illumination à proximité d'une estimation de position d'une entité émettrice de lumière par une lumière d'illumination focalisée ayant une distribution de lumière d'illumination comprenant un minimum d'intensité locale et au moins une zone d'augmentation de l'intensité adjacente au minimum,
- un détecteur (4) configuré pour détecter la lumière de détection émise par l'entité émettrice de lumière en réponse à la lumière d'illumination pour chacune des positions d'illumination, et
- un processeur (5) configuré pour déterminer une nouvelle estimation de la position de l'entité émettrice de lumière sur la base de la lumière de détection une fois que la lumière de détection dépasse une dose de lumière prédéfinie, le processeur (5) étant en outre configuré pour générer des données de suivi à partir des estimations de position déterminées, les données de suivi comprenant des valeurs de position (pᵢ) de l'entité émettrice de lumière et des points temporels (tᵢ) correspondant aux valeurs de position (pᵢ),
**caractérisé en ce que**
le processeur (5) est configuré pour obtenir un taux de suivi ou un intervalle de temps de suivi (t_{T}) défini comme l'inverse du taux de suivi, dans lequel le dispositif (1) comprend un dispositif de commande (6) configuré pour effectuer les étapes de suivi (Tᵢ) dans une séquence temporelle déterminée par le taux de suivi ou l'intervalle de temps de suivi (t_{T}), de sorte que chaque intervalle de temps (A_{T}) entre des points de temps consécutifs (tᵢ) est égal à l'intervalle de temps de suivi (t_{T}) ou à un multiple de l'intervalle de temps de suivi (t_{T}).

13. Programme d'ordinateur comprenant un code de programme configuré pour que le dispositif (1) selon la revendication 12 exécute la méthode selon l'une des revendications 1 à 11.
